Europäisches Patentamt

European Patent Office

Office européen des brevets

(11) Publication number: **0 336 767**
**A2**

(12) **EUROPEAN PATENT APPLICATION**

(21) Application number: **89303432.2**

(22) Date of filing: **07.04.89**

(51) Int. Cl.⁴: **G 05 D 1/03**
**A 01 B 69/00**

(30) Priority: **08.04.88 GB 8808333**

(43) Date of publication of application:
**11.10.89 Bulletin 89/41**

(84) Designated Contracting States:
**DE ES FR GB IT NL**

(71) Applicant: **Gossop, John Bristow**
**Croft Farm Swinefleet Common**
**Near Goole North Humberside (GB)**

(72) Inventor: **Gossop, John Bristow**
**Croft Farm Swinefleet Common**
**Near Goole North Humberside (GB)**

(74) Representative: **Jones, Colin et al**
**H.L. Cottrell & Co. Suite 1, Kings Building South Church**
**Side**
**Hull North Humberside HU1 1RR (GB)**

(54) **An automatic control system for vehicles.**

(57) An automatic control system for a vehicle (21) comprises a pair of guide members (24, 25) each located on and being moveable along a respective one of two opposing sides of an area to be traversed by the vehicles, motive means (22, 23) for driving the vehicle back and forth between the guide members and drive means for moving the guide members (24, 25) each along their respective side of the said area in fixed increments each time the vehicle completes a pass over the said area.

Fig 3

EP 0 336 767 A2

## Description

## AN AUTOMATIC CONTROL SYSTEM FOR VEHICLES

The present invention relates to an automatic control system for vehicles and in particular to such a system for controlling and guiding a vehicle towing a farming implement, such as a plough share, slurry spreader, seed drill or the like, over land to be worked. The present invention also provides a control system whereby the vehicle can be remotely controlled.

Conventional tractors are driven by human drivers. Yet in recent years the trend towards large scale farming has resulted in increasingly large fields and the work carried by these drivers has, as a consequence, become less skillful and demanding. Put simply the driver is simply required to couple a farming implement to the back of his tractor and drive it back and forth across the field. As the return on arable crops has decreased over recent years as a result of overproduction the need to farm efficiently has become even greater and savings on labour costs can make an important contribution to a farms profit margins.

Tractors are generally considered to be indispensible on a farm, yet they represent a large capital outlay and are not especially efficient in terms of their operating costs. Neither are they always beneficial to the planted crop.

In addition to the cost of employing a driver to operate a conventional tractor there are also fuel costs to be considered. The actual fuel consumption of a tractor is dependent upon a lot of different factors, such as surface type and condition, the type of wheels used and the type of farming implement being towed. However, in all circumstances a surprisingly small amount of the fuel consumed actually contributes to towing the farming implement. In fact, in tests on loose surfaces carried out in Canada it was shown that almost 70% of the fuel used went towards just moving the tractor.

As will be readily understood the weight of a tractor moving across a field causes considerable ground compaction. It has been shown that this reduces the yield of sugar beet in particular. In order to minimise the effect of ground compact ion the tractor must be driven over the same path each time it is taken onto a field, but for a human operative this is not always easy as the path may have become obscured by the crop itself. Every time the tractor is driven off the path crop damage caused. Moreover, when working at night powerful lighting has to be provided to illuminate the path.

It is an object of the present invention to provide an automatic control system for vehicles whereby a farming implement can be automatically controlled and guided over land to be worked.

It is a further object of the present invention to provide an automatic control system for vehicles which obviates the need for a motor driven tractor to tow a farming implement over land to be worked.

It is yet another object of the present invention to provide an automatic control system for vehicles which can be remotely controlled.

According to the present invention there is provided an automatic control system for a vehicle, comprising a pair of guide members, each located on and being moveable along a respective area of two opposing sides of an area to be traversed by the vehicle, motive means for driving the vehicle back and forth between the guide members and drive means for moving the guide members each along their respective side of the said area in fixed increments each time the vehicle completes a pass over the said area.

In a first embodiment of the present invention the drive means comprises a pair of winches carried by one, or between both guide members and the vehicle is connected to each winch via a cable.

Preferably, each winch is mounted on a respective one of the guide members and is operated alternatively to draw the vehicle back and forth therebetween. Alternatively, both winches are mounted on one of the guide members and a cable extends therebetween via a pulley arrangement carried by the opposite guide member. The vehicle is secured to the cable and each winch is operated alternately to draw the vehicle, first in one direction around the pulley arrangement towards one of the winches and then in the other direction around the pulley arrangement towards the other winch. In this way the vehicle may follow a U in shaped path between the two winches or may simply be drawn back and forth between the two guide members.

In a second embodiment of the present invention the vehicle is electronically driven and draws its supply from overhead power lines which extend between the guide members. Conveniently, the tension of the overhead power lines is maintained uniform by tensioning reels provided at one or both ends thereof. The tensioning reels also allow for variations in the distance between the two guide members to be accommodated as they track along the sides of the area to be covered by the vehicle.

In yet another embodiment of the present invention the vehicle is self propelling, and to this end has an onboard diesel, petrol or electric engine (where the vehicle is electrically powered this would be by means of batteries). In order to ensure that the vehicle maintains a straight and steady course between the guide members a guidance system is provided. Conveniently, this comprises an electrically energised guide wire which extends between the two guide members means for sensing the electro-magnetic field eminating from the guide wire carried by the vehicle and a simple steering system which steers the vehicle so as to always maintain the strongest possible electro-magnetic field at the sensor. Other guidance systems may be used instead though such as a laser guidance system, radio control system, etc.

Preferably, the vehicle is provided with an engine cut-off system which automatically cuts-off the motor in the event of the sensors loosing track of the guide signal. This ensures that the vehicle stops as soon as control over it is lost.

Preferably, one or both of the guide members comprises a lift mechanism whereby the vehicle can be lifted clear of the ground at the end of each pass between the guide members, thereby facilitating movement of the vehicle with the guide members along the sides of the area to be traversed. Conveniently, each lift mechanism acts to anchor its respective guide member to the ground when lowered, thereby preventing the guide members from being drawn out of position, particularly where the motive means used comprises winches carried by the guide members.

Preferably, each lift mechanism comprises a turntable whereby the vehicle can be turned through 180° at the end of each pass between the two winches. This obviates the need for a sophisticated steering mechanism, although some form of steering mechanism may still be required for those embodiments of the present invention relying upon overhead power lines and/or a guidance system (e.g. guide wire, laser or radio control).

Preferably, each guide member comprises a mast, thereby ensuring that the guide means, overhead power lines or winch cables are not interferred with by the ground.

Preferably, each mast is mounted on a track which extends along a respective side of the area to be traversed by the vehicle. Each mast is driven along its respective track by an onboard motor which may be electrically or diesel powered. Where convenient the tracks may actually form a perimeter fence of the said area.

Preferably, each track is provided with a plurality of uniformly spaced indicators or markers along its length and these indicate the distance through which the masts are moved after each pass of the vehicle.

Preferably, the vehicle and/or each mast comprises a proximity sensor which senses when the vehicle has reached a pre-determined distance from the mast towards which it is moving. The proximity sensor is connected to a control circuit which slows to a stop the implement carrying vehicle. At this point a data exchange probe may connect the mast and the vehicle so that information may be exchanged between the two. Where the vehicle is carrying farming implements for example, this information may include such parameters as the working depth and speed of the farming implement during the next passage across the field, and the water temperature, oil pressure and fuel reserves of the vehicle. Once the data exchange is completed both masts are moved along their respective tracks to the next marker, keeping the vehicle between them, and the vehicle itself is either turned around or reversed for the next passage across the field.

Preferably, the automatic system is connected to a remote control device comprising processor means for processing information relating to the operating conditions of the automatic system received through the data exchange probe and provides control signals to the automatic system. The control device may be wired to the automatic system, or it may rely upon a transceiver.

Preferably, the masts are telescopic and an upper part thereof is extended or withdrawn as the masts move up and down with any variations in the contours of the said area in the field to maintain a constant level therebetween.

Embodiments of the present invention will now be described, by way of example, with reference to the accompanying drawings, in which:-

Fig. 1 shows a schemmatic diagram of an automatic system according to a first embodiment of the present invention, for a self propelled vehicle;

Fig. 2 shows a schematic diagram of an automatic system according to a second embodiment of the present invention, comprising a winch system; and

Fig. 3 shows a schemmatic diagram of an automatic system according to a third embodiment of the present invention, also comprising a winch system.

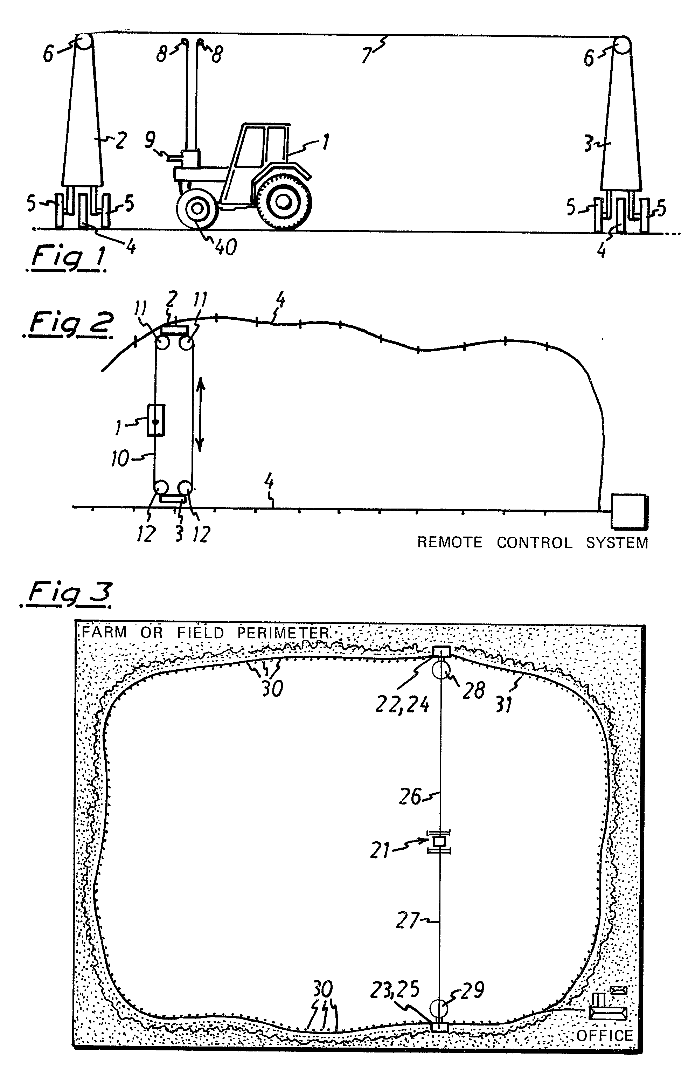

Referring to Fig. 1 of the accompanying drawings there is shown a motorised vehicle 1 which is positioned between a pair of masts 2 and 3 mounted opposite each other across a field to be worked. In use, the vehicle 1 would have a farming implement secured at one end of it, but this is not shown.

The motorised vehicle 1 may be electrically driven by rechargeable batteries, but more conveniently is powered by a diesel engine having an onboard fuel supply. The front wheels 40 of the vehicle 1 are steerable through a steering mechanism and a control system (not shown) which will be described in greater detail hereinbelow. The masts 2 and 3 are each mounted on a respective track 4 which extends along an edge of the field to be worked and are driven along the length of the track 4 on wheels 5 by an onboard electric or diesel powered motor (not shown). Although not shown both tracks 4 have spaced along their full length a series of markers which are spaced from each other by the basic unit width of a farming implement. A tensioning reel 6 is mounted at the top of each mast 2 and 3, and between the two reels 6 there is strung a guide wire 7 carrying a low voltage. The tensioning reels 6 ensure that the guide wire 7 is kept taught between the masts 2 and 3 at all times. Both masts 2 and 3 are telescopic and can be automatically extended and retracted relative to the opposite mast so as to maintain the guide wire substantially level over its entire length.

In use, the vehicle 1 is driven back and forth between the masts 2 and 3 using the guide wire to ensure that it does not lose its way. To this end the vehicle 1 is provided with a pair of electro-magnetic sensors 8, each mounted on a respective side of the guide wire. The strength of the signal detected by the sensors 8 is a function of its distance from the guide wires 7. By steering the vehicle 1 so as to maintain an equal signal strength at each sensor 8 the vehicle 1 can be made to follow the guide wire. In the event that the signal is lost by one or both of the sensors 8 then the vehicle motor is cut-off to prevent the vehicle running away with itself.

The vehicle 1 comprises a control circuit (not shown) which is able to monitor and store details of its various operating parameters. In addition, the control circuit is also able to control the farming implement which it tows behind it through a conventional hydraulic link. This information and the control signals are exchanged through a data exchange probe 9 carried at the front of the vehicle 1 which engages in a complimentary data exchange socket carried by mast 2 and is transmitted to a central control station which may be the farmers office. Here the information can be processed and the control signals varied. Of course, with suitable processing capabilities much of this information and the control signals can actually be generated and processed onboard the vehicle 1.

The data exchange probe 9 also comprises a proximity sensor which detects when the vehicle 1 is within a predetermined distance from the masts 2 and 3 towards which it is moving. When it is near enough the vehicle 1 is slowed to a halt for the data exchange to take place.

In use, a towing implement is connected to the rear of the vehicle 1 which is then started up. As it tracks across the field the vehicle 1 steers itself to follow the guide wire 7. As the vehicle 1 approaches the mast on the opposite side of the field the proximity sensor carried at its forward end detects the masts presence and causes the vehicle to slow to a stop with the data exchange probe 9 coupled to the data exchange socket in the mast. Information relating to the vehicle 1 and control signals are passed between a central processor (not shown) and the vehicle control circuit. Once this is completed a signal is provided to both masts 2 and 3 to move along the track 4 to the next marker thereon. The tractor is automatically steered to follow the guide wire 7 and as it does so turns through 180° so as to end up facing in the opposite direction ready to work its way down the field back towards the opposite mast. The cycle is completed until the entire field has been worked.

The driverless system described with reference to Fig. 1 does not require a human operative to be present at all time, unlike with a conventional tractor being driven up and down a field. Moreover, being highly specialised the vehicle 1 need not comprise any sophisticated features. It can be designed purely and simply for the task of towing a farming implement across a field.

Instead of a guide wire carrying a low power electric signal the driverless system described with reference to Fig. 1 may make use of a laser guidance system or a radio frequency guidance system. In either case operation of the system is much as described above.

In an alternative embodiment of the present invention the vehicle 1 may be powered by an overhead power line. In this case the guide wire 7 may comprise the power line and operation of the system is much as described above, except that it ceases to be necessary to provide a motor cut-off. Obviously, if the vehicle 1 loses the power line then power to the motor will cease anyway.

Referring now to Fig. 2 an alternative embodiment of the present invention will now be described. Again the system comprises an implement towing vehicle 1, but in this embodiment it is not powered by an onboard engine or motor. Instead, the vehicle 1 is connected in a length of cable 10, the ends of which are would onto a respective winch 11. Both winches 11 are carried by the one mast 2 and the centre of the cable 10 between the two winches 11 is directed around a pair of pulleys 12 carried by the opposite mast 3. It will be appreciated that as each winch 11 is operated the vehicle 1 is pulled towards and follows a U-shaped path from one winch 11 to the other around the pulleys 12. Once the vehicle 1 reaches the winch 11, the other winch is switched on causing the vehicle to reverse back in the opposite direction. A farming implement is provided at each end of the vehicle to take advantage of this.

To ensure maximum ground coverage the distance between the arms of the cable 10 is preferably equal to the width of the farming implement to be towed.

In order to prevent the masts 2 and 3 being pulled off the tracks 4, each mast is provided with a retractable anchor which can be driven into the ground to secure it in position between each winch operation.

Again, the only labour required with the driverless system of Fig. 2 is that of setting up, connecting the farm implements and providing appropriate instructions to the control system. Thereafter the driverless system will operate without human intervention.

Advantageously, a series of motors can be provided to drive the winches 11 and these may be cut in or out as required to pull the vehicle across the field.

With the system of Fig. 2 no power is wasted in wheel slippage or in carrying the weight of an engine, cab, transmission and the like, found in a motor driven vehicle.

Finally, being electrically driven and not requiring human intervention, the system can operate at night on low cost electricity.

Referring now to Fig. 3 of the accompanying drawings there is shown yet another embodiment of an automatic system embodying the present invention and in which an implement carrying vehicle 21 is propelled over the ground by means of a pair of winches 22 and 23. In the embodiment shown in this figure each winch 22, 23 is carried by a respective one of a pair of masts 24 and 25, each mounted on a respective headland of an area of land to be worked. Each winch 22, 23 is connected to a respective end of the vehicle 21 by a cable 26, 27 respectively, and as should be immediately apparent, by operating each winch 22, 23 alternately the vehicle 21 is drawn back and forth over the land to be worked and between the two masts 24 and 25.

At the base of each mast 24 and 25 there is provided a turntable 28 and 29, respectively. When the vehicle 21 has completed a pass across the land to be worked it is drawn onto the turntable 28, 29 towards which it is being pulled and the turntable 28, 29 is then lifted to facilitate movement of the vehicle 21 sideways across the land with the two masts 24 and 25 to the position of the next marker 30 carried by a guide wire 31 extending along each headland. (For convenience each mast is moveable along a track extending along the headland of the land, though it is envisaged that the track may not be essential). Once the masts have assumed the next position along the guide wire 31, the turntable is rotated so that the vehicle is facing forward across the land to be worked and the winch carried by the opposite mast can be operated to draw the vehicle back across the land. This procedure is repeated until the whole area of land bounded by the guide wire 31 has been worked.

In some, circumstances it may not be necessary to turn the vehicle 21 around at the end of each pass between the nasts. Then the turntables 28 and 29 can be replaced with simple lift devices to raise the vehicle off the ground as it is moved sideways with the masts.

## Claims

1) An automatic control system for a vehicle (21), comprising a pair of guide members (24, 25), each located on and being moveable along a respective one of two opposing sides of an area to be traversed by the vehicle, motive means (22, 23) for driving the vehicle back and forth between the guide members and drive means for moving the guide members (24, 25) each along their respective side of the said area in fixed increments each time the vehicle completes a pass over the said area.

2) An automatic control system for a vehicle according to Claim 1, wherein the motive means (22, 23) comprises a pair of winches carried by one, or between both guide members (24, 25) and the vehicle is connected to each winch (22, 23) via a cable (26, 27).

3) An automatic control system for a vehicle according to Claim 2, wherein each winch (22, 23) is mounted on a respective one of the guide members (24, 25) and is operated alternatively to draw the vehicle (21) back and forth therebetween.

4) An automatic control system for a vehicle according to Claim 2, wherein both winches (11) to which the vehicle (1) is connected are mounted on one of the guide members (2) and a cable (10) extends therebetween via a pulley arrangement (12) carried by the opposite guide member (3).

5) An automatic control system for a vehicle according to Claim 1, wherein the vehicle (1) is electrically driven and draws its supply from overhead power lines which extend between the guide members (2).

6) An automatic control system for a vehicle according to Claim 1, wherein the vehicle comprises an engine and is self propelling.

7) An automatic control system for a vehicle according to any preceeding claim, comprising vehicle guide means.

8) An automatic control system for a vehicle according to Claim 7, wherein the vehicle guide means comprises an electrically energised guide wire (7) which extends between the two guide members (2, 3), sensor means (8) carried by the vehicle for sensing the electromagnetic field eminating from the guid wire (7) and a vehicle steering system responsive to the level of signal sensed by the sensor means.

9) An automatic control system for a vehicle according to Claim 7 or 8, when dependent on Claim 6, wherein the vehicle is provided with an engine cut-off system which automatically cuts off the engine in the event of the vehicle guide means failing or being lost.

10) An automatic control system for a vehicle according to any preceeding claim, wherein one or both of the guide members (24, 25) comprises a lift mechanism whereby the vehicle (21) can be lifted clear of the ground at the end of each pass between the guide members (24, 25).

11) An automatic control system for a vehicle according to any preceeding claim, wherein one or both guide member (24, 25) comprises a turntable, (28, 29) whereby the vehicle can be turned through 180 at the end of each pass between the guide members.

12) An automatic control system for a vehicle according to any preceeding claim, wherein each guide member comprises a mast (2, 3).

13) An automatic control system for a vehicle according to Claim 12, wherein each mast is mounted on a track which extends along a respective side of the area to be traversed by the vehicle.

14) An automatic control system for a vehicle according to Claim 13, wherein each track is provided with a plurality of uniformly spaced indicators or markers along its length and these indicate the distance through which the masts are moved after each pass of the vehicle.

15) An automatic control system for a vehicle according to any preceeding claim, wherein the vehicle and/or each mast comprises a proximity sensor which senses when the vehicle has reached a pre-determined distance from the mast towards which it is moving, which proximity sensor is connected to a control circuit which slows the vehicle to a stop.

16) An automatic control system for a vehicle according to any preceeding claim, comprising a remote control device comprising processor means for processing information relating to the operating conditions of the automatic system.

17) An automatic control system for a vehicle according to Claim 16, wherein data relating to the operating conditions of the vehicle are exchanged between the vehicle and the remote control device via a data exchange link carried by the vehicle and one or both guide members, the link being effected each time the vehicle arrives at the or each guide member.

_Fig_1_.

6

8   8

9       1

2

3

5       5        40      5       5

4                4

_Fig_2_.

11  2  11        4

1

10

12  3  12                    4

REMOTE  CONTROL  SYSTEM

_Fig_3_.

FARM  OR  FIELD  PERIMETER

30                    22,24    28   31

26

21

27

30        23,25    29                    OFFICE